Europäisches Patentamt

European Patent Office

Office européen des brevets

(11) Veröffentlichungsnummer: **0 247 999 B1**

# EUROPÄISCHE PATENTSCHRIFT

(45) Veröffentlichungstag der Patentschrift: **01.07.92**

(51) Int. Cl.⁵: **A23F 5/20**

(21) Anmeldenummer: **87890117.2**

(22) Anmeldetag: **22.05.87**

(54) Verfahren zum Behandeln von Kaffee.

(30) Priorität: **27.05.86 AT 1429/86**

(43) Veröffentlichungstag der Anmeldung:
**02.12.87 Patentblatt 87/49**

(45) Bekanntmachung des Hinweises auf die
Patenterteilung:
**01.07.92 Patentblatt 92/27**

(84) Benannte Vertragsstaaten:
**AT BE CH DE FR GB IT LI NL SE**

(56) Entgegenhaltungen:
**EP-A- 0 101 135**
**EP-A- 0 114 426**
**DE-A- 3 445 502**
**US-A- 4 322 445**

(73) Patentinhaber: **SCHOELLER-BLECKMANN Gesellschaft m.b.H.**
**Postfach 31 Hauptstrasse 2**
**A-2630 Ternitz(AT)**

(72) Erfinder: **Seidlitz, Helmut, Dipl.-Ing.**
**Weiglgasse 16**
**A-2630 Ternitz(AT)**
Erfinder: **Lack, Eduard, Dipl.-Ing. Dr. techn.**
**Sonnwendsteingasse 22/2/8**
**A-2630 Ternitz(AT)**

(74) Vertreter: **Kretschmer, Adolf, Dipl.-Ing. et al**
**Patentanwälte Dipl.Ing. A. Kretschmer Dr.**
**Thomas M. Haffner Schottengasse 3a**
**A-1014 Wien(AT)**

## Beschreibung

Die Erfindung betrifft ein Verfahren zum Behandeln von Kaffee, bei welchem rohem Kaffee mit einem mindestens ein unter Druck stehendes Gas und mindestens eine organische Flüssigkeit aufweisenden Fluid Koffein im wesentlichen und andere Inhaltsstoffe, insbesondere bei einem späteren Rösten Reizstoffe bildende Stoffe, z.B. Kaffee-Wachse und Terpene zumindest teilweise entzogen werden.

Es ist eine große Zahl von Verfahren bekannt, nach welchen rohem oder geröstetem Kaffee oder Kaffee-Extrakten durch Extraktion mit bei über- oder unterkritischen Bedingungen vorliegenden Gasen oder mit Flüssigkeiten Koffein entzogen wird. Es wird dazu beispielshaft auf das mit $CO_2$ unter überkritischen Bedingungen arbeitende Entkoffeinierungsverfahren gemäß DE-OS 2 005 293 verwiesen. Ein Nachteil des Verfahrens besteht darin, daß trotz guter Löslichkeit von Koffein im $CO_2$ bei den angewandten Drücken die Extraktionsdauer, insbesondere bei ja infolge der Extraktion sinkenden Koffeingehalten stark steigt und die beim späteren Rösten des entkoffeinierten Kaffees Reizstoffe bildenden Stoffe, wie z.B. Wachs und Terpene, nur in geringem Ausmaß bzw. ungezielt entfernt werden. Zur Verbesserung und zur Verminderung des Gehaltes am Reizstoffbildnern im Kaffee ist es weiters bekanntgeworden, dem unter Druck stehenden Extraktionsgas ein sogenanntes Schleppmittel zuzusetzen. Aus der AT-PS 359 814 ist ein Verfahren zur Extraktion von Koffein aus Kaffee bekannt, bei dem ein Lösungsmittel, dessen erste Komponente bei den angewandten Bedingungen gasförmig ist, und dessen zweite Komponente so ausgewählt ist, daß die Mischung der beiden Komponenten der bei der Extraktion angewandten Temperatur flüssig ist, eingesetzt wird. Dort sind unter vielen aufgezählten Beispielen als erste Komponente Kohlendioxid und als zweite Komponente Äthylacetat erwähnt. Nachteil dieses Verfahrens ist neben der Schwierigkeit einer gleichmäßigen Führung der flüssigen Phase durch die Kaffeeschüttung, daß bei der einstufigen Extraktion die Wirtschaftlichkeit beeinträchtigende hohe Extraktionszeiten erforderlich sind und eine Abstimmung des Extraktionsmittels auf die während der Extraktion abnehmenden Gehalte der extrahierbaren Inhaltsstoffe sowie auf die durch die Extraktion bedingten Eigenschaftsveränderungen des Kaffees nicht erfolgt, sowie weiters, daß bei Ausbringen des entkoffeinierten Kaffees und Einbringen des zu extrahierenden Kaffees die Extraktion unterbrochen werden muß.

Die Erfindung hat sich die Aufgabe gestellt, ein wie eingangs erwähntes Verfahren zu schaffen, bei welchem bei die Wirtschaftlichkeit verbessernden verkürzten Extraktionszeiten eine Anpassung des Extraktionsmittels an die sich im Laufe der Extraktion ändernden Eigenschaften des Kaffees erfolgen kann und bei Ein- und Ausbringen von Kaffee die Extraktion nicht unterbrochen werden muß.

Gegenstand der Erfindung ist ein Verfahren zum Behandeln von Kaffee, wobei rohem Kaffee mit gegenüber dem natürlichen Wassergehalt erhöhtem Wassergehalt durch Extraktion mit einem mit Druck beaufschlagten, ein Gas und eine organische Flüssigkeit enthaltenden Fluid im wesentlichen Koffein und zumindest teilweise beim Rösten Reizstoffe bildende Stoffe, z.B. Wachse und Terpene, entzogen werden und das Extraktionsfluid nach Abtrennung der aus dem Kaffee extrahierten Stoffe und Regenerierung in die Extraktion zurückgeführt wird, das im wesentlichen darin besteht, daß der Kaffee in mindestens zwei, vorzugsweise mindestens drei hintereinander geschalteten Extraktionsstufen im Gegenstrom mit einem in diesen Stufen im gasförmigen Zustand gehaltenen, das Gas, vorzugsweise wasserhaltiges Kohlendioxid und die organische Flüssigkeit, vorzugsweise Äthylacetat, aufweisenden Extraktionsgemisch extraktiv behandelt wird, wobei in einer jeweils letzten Stufe im wesentlichen von Koffein und Reizstoffbildnern freies Extraktionsgemisch mit in vorhergehenden Stufen in seinem Gehalt an Koffein und Reizstoffbildnern am stärksten reduziertem Kaffee in Berührung gebracht wird, und das Extraktionsgemisch mit von einer jeweiligen Stufe zur vorhergehenden Stufe steigender Beladung mit Koffein und Reizstoffbildnern mit in den genannten Stufen diese Stoffe jeweils in steigenden Gehalten aufweisendem Kaffee in Kontakt gebracht wird, wobei jeweils in zwischen den genannten Stufen angeordneten Zwischenstufen der Gehalt an organischer Flüssigkeit, vorzugsweise Äthylacetat, im Extraktionsgemisch auf einen für die jeweils zugeordnete (jeweils vorhergehende) Stufe vorgesehenen Wert eingestellt wird. Der Extraktionsprozeß mit mehreren Stufen und jeweils zwischengeschalteten Zwischenstufen ermöglicht optimale Anpassung der Zusammensetzung des Extraktionsgemisches an den jeweiligen, sich während der Extraktion ändernden Zustand des Kaffees in den einzelnen Stufen, was verbesserte Ausbeute und Verkürzung der Extraktionszeit und ein Endprodukt höherer Geschmacksqualität bringt. Durch die Aufrechterhaltung eines unter den herrschenden überkritischen Bedingungen gasförmigen Zustandes des Extraktionsgemisches in den Extraktionsstufen ist, wie gefunden wurde, im Vergleich zur Extraktion mit flüssiger Phase der Extraktionsvorgang beschleunigt. Der Prozeß ist diskontinuierlich in Bezug auf den Feststoff, d.h. der vorbehandelte Kaffee wird chargenweise ein- und ausgetragen. Wesentlich ist die Extraktion in mehreren Stufen. Das Lösungsmittel strömt nacheinander durch die Stufen, wobei der Vorteil einer weit höheren Beladung des Lösungsmittels pro Zyklus des Extraktionsgemisch-Durchlaufs erreicht wird und somit wesentliche Energiekosteneinsparung. Die Schaltung der Stufen erfolgt so, daß eine quasi-kontinuierliche Gegenstromextraktion erreicht werden kann. Da die Konzentration des Koffeins im Extraktionsmittel in linearer Abhängigkeit in den Extraktionsmittelverbrauch und damit verbunden in den Energieverbrauch eingeht und durch die mehrstufige Extraktion bei der Einhaltung der optimalen Bedingungen eine hohe Beladung möglich ist, wird besondere Wirtschaftlichkeit des Verfahrens erreicht.

Es hat sich als vorteilhaft erwiesen, den Druck des gasförmigen Extraktionsgemisches in den Extraktionsstufen im wesentlichen auf 100 bis 350 bar, vorzugsweise 180 bis 300 bar zu halten. Bei diesen Drücken läßt sich ein besonders extraktionsbegünstigender inniger Kontakt von Extraktionsgemisch und Kaffee erreichen.

Wenn die Temperatur in den Extraktionsstufen auf 40 bis 150°C, vorzugsweise 40 bis 100°C, insbesondere auf 60 bis 85°C gehalten wird, ist bei wirtschaftlicher Extraktionsgeschwindigkeit schonende Behandlung des Kaffees sichergestellt, der aus dem extrahiertem Kaffee geröstete Kaffee ist in seinem Geschmack praktisch nicht mehr beeinträchtigt.

Wenn in den Extraktionsstufen im Extraktionsgemisch jeweils ein Äthylacetatgehalt von 5 bis 20 Gew.-% vorzugsweise von 9 bis 13 Gew.-%, eingestellt wird, ist der gasförmige Zustand, der zur beschleunigten Extraktion beiträgt, gewährleistet.

Vorteilhafterweise wird der Druck des Extraktionsgemisches in den Extraktionsstufen untereinander, abgesehen vom Druckabfall bedingt durch Leitungswege, Absperrorgane u. dgl., im wesentlichen gleichgehalten, womit dieser für die Extraktionswirkung wirksame Parameter im wesentlichen konstant gehalten ist und über die Zusammensetzung des Extraktionsgemisches eine jeweils optimale Einstellung des Extraktionsgemisches erfolgen kann.

Um besonders schonende Behandlung des Kaffees zu erreichen, wobei insbesondere auf die Instabilität einzelner Bestandteile im rohen bzw. wenig extrahierten Kaffee Rücksicht genommen ist, ist es vorteilhaft, wenn jeweils vorhergehende Extraktionsstufen mit im Vergleich zu ihnen folgenden Stufen gesenkter Temperatur betrieben werden.

Dabei ist es besonders bevorzugt, wenn jeweils in den Zwischenstufen zwischen den Extraktionsstufen die Temperatur des Extraktionsgemisches gesenkt wird, wodurch bei gleichzeitiger Temperaturkontrolle die Steuerung der jeweils optimalen Zusammensetzung des in die die niedrigere Temperatur aufweisende Kolonne einzubringenden Extraktionsgemisches erleichtert ist. Dabei ist es vorteilhaft, wenn ein infolge der Senkung der Temperatur in den Zwischenstufen zusammen mit Anteilen anorganischen Flüssigkeit sich abscheidender Anteil an extrahierten Stoffen aus diesen Zwischenstufen abgezogen wird.

Weiters hat es sich zur Erreichung hoher Reduktion der Menge und optimaler Ausbeute an den zu extrahierenden Bestandteilen und zur Gewinnung eines von den Extraktionsstoffen praktisch freien Extraktionsgemisches für die Rückführung in den Prozeß als günstig erwiesen, wenn eine mehrstufige Regeneration desselben vorgesehen wird, innerhalb welcher aus dem mit Koffein und Reizstoffbildnern beladenen Extraktionsgemisch nach Verlassen einer jeweils ersten, den rohen Kaffee mit dem größten Gehalt an den genannten Inhaltsstoffen aufweisenden Extraktionsstufe vor Wiedereinbringung in die letzte Extraktionsstufe zuerst in einer Trennstufe durch Druckminderung ein wesentlicher Teil der extrahierten Inhaltsstoffe und danach in einer Waschstufe ein weiterer wesentlicher Teil der Inhaltsstoffe abgetrennt wird, wonach das Extraktionsgemisch vor Wiedereinbringung in die Extraktion durch eine der Waschstufe nachgeschaltete, vorzugsweise Aktivkohle aufweisende, Adsorptionsstufe geführt wird. Diese Kombination von Wasch- und Adsorptionsstufe hat folgenden Vorteil: Wird allein eine Waschstufe eingesetzt, so erreicht man mit einem derart regenerierten Extraktionsgemisch nicht die geforderten niedrigen Endkonzentrationen an Koffein oder nur nach unwirtschaftlich langen Verweilzeiten. Wird allein eine Adsorptionsstufe eingesetzt, dann muß das gesamte Koffein an der Aktivkohle adsorbiert werden. Die Aktivkohle ist rasch beladen, was den Prozeß mit hohen Kosten belastet.

Mit der Kombination von Waschstufe und Adsorptionsstufe wird der größte Teil der extrahierten Stoffe mit Wasser ausgewaschen, und nur zur restlichen Feinreinigung dient die Adsorptionsstufe. Diese Schaltung verlängert die Standzeiten der Adsorptionsstufe und spart die Kosten für Aktivkohle.

Schließlich ist der Vorteil einer Aufrechterhaltung der Extraktion auch während Beschickung mit Rohkaffee und Entnahme des entkoffeinierten Kaffees günstig erreichbar, wenn nach Erreichen einer vorgesehenen Reduktion der Gehalte an Koffein und Reizstoffbildnern im in der jeweils letzten Extraktionsstufe behandelten Kaffee die Zuführung des im wesentlichen von extrahierten Stoffen befreiten, rückgeführten Extraktionsgemisches auf die jeweils vorletzte Stufe umgeschaltet wird, aus der gesamten letzten Stufe der fertig behandelte Kaffee ausgetragen wird, diese Stufe mit Kaffee mit den höchsten, vorzugsweise mit rohem Kaffee mit den natürlichen, Gehalten an Koffein und Reizstoffbildnern beschickt wird, und dieser - jetzt ersten - vorher letzten Stufe das die vorher erste Stufe verlassende Extraktionsgemisch zugeführt wird.

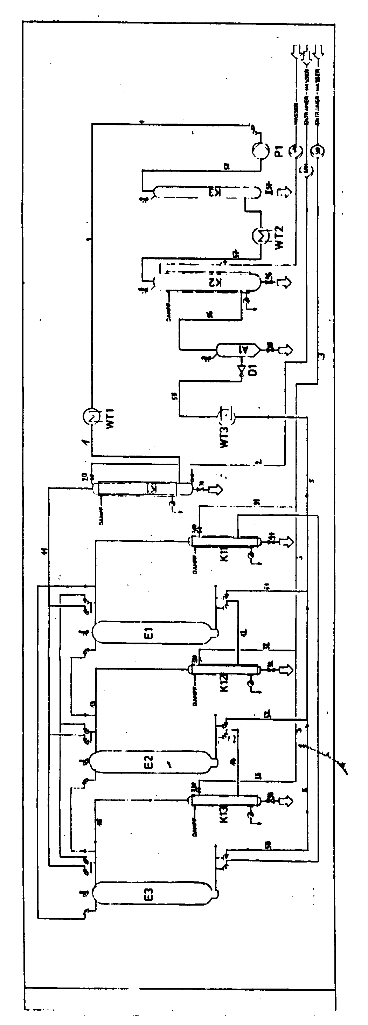

Anhand der Zeichnung wird die Erfindung näher erläutert:

Über eine Leitung 1 wird in einem Wärmetauscher WT 1 auf gewünschte Temperatur gebrachtes, im wesentlichen $CO_2$ enthaltendes Extraktionsgemisch, welches aus einer Regeneration kommt und Restgehalte von Äthylacetat und Wasser enthält, durch eine mit Dampf geheizte Schleppmittelbeaufschlagungs-Kolonne K 1 geführt, in welcher dem Gemisch, gefördert mit einer Pumpe 200 über Leitung 2, mit Dosierventil 20 mengengeregelt, ein Äthylacetat-Wassergemisch entgegengeführt wird. Über Leitung 11 erfolgt Überführung des gasförmigen im Äthylacetatgehalt eingestellten Extraktionsmittels in eine - im gezeigten Verfahrenszustand die "letzte" Stufe - bildende Extraktionskolonne E 1, in welcher sich schon in vorheriger Stufen extrahierter Kaffee mit dem geringstem Gehalt an Koffein und Reizstoffbildnern befindet. Nach Durchströmen des Kaffees wird das dort nur schwach mit Inhaltsstoffen beladene Extraktionsgemisch über Leitung 12 der zur Schleppmittelmengeneinstellung dienenden Zwischenstufenkolonne K 12 zugeführt, und dort wird dem Gemisch, über die Leitungen 3, 32 gefördert von einer Pumpe 300 und mit dem Dosierventil 320 mengengeregelt, ein Äthylacetat-Wassergemisch entgegengeführt. Das auf diese Weise in seiner Zusammensetzung wieder optimierte Extraktionsgemisch wird über Leitung 13 in eine hier die "vorletzte" Stufe bildende Extraktionskolonne E 2, in der sich Kaffee mit höherer Konzentration an Koffein, Reizstoffbildnern u. dgl. als in der Kolonne E 1 befindet, eingebracht. Beim Durchströmen der Kolonne E 2 erfolgt weitere Beladung eines Extraktionsgemisches mit den extrahierbaren Stoffen und das so stärker beladene Gemisch wird über Leitung 14 durch eine weitere Zwischenstufe, Kolonne K 13, welche über die Leitungen 3, 33 mit einem in seiner Menge durch ein Dosierventil 330 geregelten Äthylacetat-Wassergemisch beschickt wird, geführt, wonach über Leitung 15 das wieder optimierte Extraktionsgemisch in die - hier die "erste" Stufe bildende - Extraktionskolonne E 3, die mit Kaffee mit natürlichem Koffein- und Reizstoffbildner-Gehalt beschickt ist, eingebracht wird. Die vorher erwähnte Vorstufenkolonne K 1 und die Zwischenstufenkolonnen K 12 und K 13 weisen Abführschleusen 90, 92 und 93 auf, über welche überschüssiges Äthylacetat abgeführt wird, welches bei den Kolonnen K 12 and K 13 Anteile der extrahierten Komponenten des Kaffees enthält. Aus dem ausgeschleusten Produkt kann z.B. das Äthylacetat destillativ abgetrennt werden und wird schließlich den Extraktionsgemisch-Kreislauf wieder zugeführt. Der Kolonne E 1 ist ebenfalls eine Zwischenstufenkolonne K 11 mit Abführschleuse 91 zugeordnet, welche über Leitungen 3, 31 mit von der Pumpe 200 gefördertem Äthylacetat-Wassergemisch, mit einem Dosierventil 310 mengenregelbar, versorgbar ist und dann in Betrieb steht, wenn die Kolonne E 1 gerade nicht als "letzte" Extraktionsstufe arbeitet. Anstelle der Dosierventile 20, 310, 320, 330 der Vorstufe K 1 und der Zwischenstufen K 11, K 12, K 13 können auch Dosierpumpen vorgesehen sein oder es können alle Zwischenstufen mit nur einer Dosierpumpe versorgt werden, wenn in ihnen die Temperatur so geregelt ist, daß das von ihnen gelieferte Extraktionsgemisch die optimale Zusammensetzung für die zugeordnete Extraktionsstufe aufweist. Nach Durchströmen der Kolonne E 3 wird das dort stark beladene Extraktionsgemisch über eine Leitung 53 in die Rückführleitung 5 eingebracht, und nach Temperatureinstellung im Wärmetauscher WT 3 wird mit der in Leitung 55 angeordneten Druckreduktionsdrossel D 1 der Druck des beladenen Extraktionsgemisches abgesenkt und es wird im unmittelbar folgenden Abscheider A 1 der größte Teil der extrahierten Inhaltsstoffe zusammen mit Wasser und Äthylacetat abgeschieden, welches Gemisch über Schleuse 95 ausgetragen wird. Um eine Abscheidung im Wärmetauscher zu verhindern wird das Lösungsmittel von Drossel D 1 im Wärmetauscher WT 3 so hoch erwärmt, daß es nach der isenthalpen Entspannung in der Drossel D 1 genau die thermodynamischen Bedingungen im Abscheider A 1 erreicht. Die Abscheidebedingungen sind z.B. 40 bis 180 bar, vorzugsweise 90 bis 150 bar und 20 bis 80 °C, vorzugsweise 60 °C. Das teilentladene Extraktionsgemisch wird über Leitung 56 einer z.B. auf 60 °C beheizten, über eine Leitung 4, mit von einer Pumpe 400 gefördertem Waschwasser beschickten Waschkolonne K 2 zugeführt, aus welcher ein weiterer von dem Waschwasser aufgenommener wesentlicher Teil der extrahierten Stoffe über die Schleuse 96 entnommen wird. Schließlich wird über Leitung 57 das Extraktionsgemisch nach Kühlung, z.B. auf 15 bis 35 °C im Wärmetauscher WT 2 einer mit Aktivkohle beschickten Adsorptionskolonne mit Austragschleuse 97 zugeführt, in welcher dem Gemisch letzte Reste bzw. Spuren der extrahierten Inhaltsstoffe entzogen werden, wonach das Gemisch mit wenigen ppm Koffeingehalt über die Leitung 58 abgeführt, mittels eines Kompressors bzw. einer Pumpe P 1 wieder auf den Extraktionsarbeitsdruck gebracht und über Leitung 1 zur Beaufschlagungsstufe K 1 geleitet wird. Die bei den Schleusen 95 und 96 der Abscheidestufe A 1 und der Waschstufe K 2 abgezogenen, Koffein und Reizstoffbildner enthaltenden Äthylacetat-Wassergemische werden aufgearbeitet und das zurückgewonnene Äthylacetat wird in die Extraktion zurückgeführt.

In der Zeichnung ist mit verdickt dargestellten Leitungen ein Zustand des Verfahrens angedeutet, in welchem eine - vorher die "letzte" Stufe bildende Kolonne E 3 zum Austrag von fertig extrahiertem Kaffee bzw. zum Einbringen von frischem, zu extrahierenden Kaffee vom Extraktionskreislauf abgekoppelt ist und die Rückführung des beladenen Extraktionsmittelgemisches zur Regeneration für diese Zeit aus der Kolonne E 2 über die Leitungen 53, 5 erfolgt. Nach Befüllung der Kolonne E 3 mit frischem Kaffee, erfolgt deren Zuschaltung in den Kreislauf und es läuft das Verfahren, wie vorher beschrieben, mit den 3 Extraktionsstufen.

Die vorher näher beschriebenen Leitungen sind, wie in der Figur gezeigt, über entsprechende Absperr- und Umschaltorgane mit Zweigleitungen verbunden, die nicht näher erläutert sind, womit durch entsprechende Umschaltung die Verlegung der jeweils aktuellen Extraktionsstufen mit ihren jeweiligen Arbeitsbedingungen von Kolonne zu Kolonne erfolgen kann.

Beispiel:

Mit Wasserdampf bei 120°C gedämpfte, auf einen Wassergehalt von 44 Gew.-% gebrachte grüne Kaffeebohnen wurden in einer wie in der Zeichnung schematisch gezeigten, dreistufigen Extraktionsanlage behandelt, wobei die "letzte" Stufe E 1 jeweils mit einer Temperatur von etwa 87°C die vorhergehende, E 2 mit einer solchen von etwa 75°C und die "erste" Stufe E 3 mit etwa 65°C betrieben wurden. Das im überkritisch gasförmigem Zustand vorliegende Extraktionsgemisch mit $CO_2$, Wasser und Äthylacetat wies einen Arbeitsdruck von 250 bar auf, wobei jeweils für die "letzte" Stufe E 1 ein Äthylacetatgehalt von etwa 13 Gew.-%, für die "vorhergehende" Stufe E 2 von etwa 10 Gew.-% und für die "erste" Stufe von etwa 8 Gew.-% eingestellt wurde. Die Extraktionszeit wurde jeweils für die "letzte" Stufe auf 6,5 h für die "vorhergehende" Stufe auf 3 h und für die "erste" Stufe auf 1,5 Stunden gehalten.

Bei Verfahrensführung unter diesen Bedingungen konnte nach üblicher Aufarbeitung bei einer Ausbeute von 97,5 Gew.-% des im Kaffee enthaltenden Koffeins ein endgültiger Koffeingehalt im behandelten Kaffee auf 0,06 Gew.-% erreicht werden. Der Gehalt des, wie beschrieben, erhaltenen Kaffees an Carbonsäurehydroxytryptamid betrug unter 90 ppm.

**Patentansprüche**

1. Verfahren zum Behandeln von Kaffee, wobei rohem Kaffee mit gegenüber dem natürlichen Wassergehalt erhöhtem Wassergehalt durch Extraktion mit einem mit Druck beaufschlagten, ein Gas und eine organische Flüssigkeit enthaltenden Fluid im wesentlichen Koffein und zumindest teilweise beim Rösten Reizstoffe bildende Stoffe, z.B. Wachse und Terpene, entzogen werden, und das Extraktionsfluid nach Abtrennung der aus dem Kaffee extrahierten Stoffe und Regenerierung in die Extraktion zurückgeführt wird, dadurch gekennzeichnet, daß der Kaffee in mindestens zwei, vorzugsweise mindestens drei hintereinander geschalteten Extraktionsstufen im Gegenstrom mit einem in diesen Stufen im gasförmigen Zustand gehaltenen, das Gas, vorzugsweise wasserhaltiges Kohlendioxid und die organische Flüssigkeit, vorzugsweise Äthylacetat, aufweisenden Extraktionsgemisch extraktiv behandelt wird, wobei in einer jeweils letzten Stufe im wesentlichen von Koffein und Reizstoffbildnern freies Extraktionsgemisch mit in vorhergehenden Stufen in seinem Gehalt an Koffein und Reizstoffbildnern am stärksten reduziertem Kaffee in Berührung gebracht wird, und das Extraktionsgemisch mit von einer jeweiligen Stufe zur vorhergehenden Stufe steigender Beladung mit Koffein und Reizstoffbildnern mit in den genannten Stufen diese Stoffe jeweils in steigenden Gehalten aufweisendem Kaffee in Kontakt gebracht wird, wobei jeweils in zwischen den genannten Stufen angeordneten Zwischenstufen der Gehalt an organischer Flüssigkeit, vorzugsweise Äthylacetat, im Extraktionsgemisch auf einen für die jeweils zugeordnete Stufe vorgesehenen Wert eingestellt wird.

2. Verfahren nach Anspruch 1, dadurch gekennzeichnet, daß der Druck des gasförmigen Extraktionsgemisches in den Extraktionsstufen auf 100 bis 350 bar, vorzugsweise 180 bis 300 bar, gehalten wird.

3. Verfahren nach Anspruch 1 oder 2, dadurch gekennzeichnet, daß die Temperatur in den Extraktionsstufen auf 40 bis 150°C, vorzugsweise 40 bis 100°C, insbesondere auf 60 bis 85°C, gehalten wird.

4. Verfahren nach Anspruch 1 bis 3, dadurch gekennzeichnet, daß in den Extraktionsstufen ein Extraktionsgemisch mit einem Gehalt von 5 bis 20 Gew.-%, vorzugsweise von 9 bis 13 Gew.-%, Äthylacetat eingesetzt wird.

5. Verfahren nach einem der Ansprüche 1 bis 4, dadurch gekennzeichnet, daß der Druck des Extraktionsgemisches in den Extraktionsstufen untereinander in wesentlichen gleich gehalten wird.

6. Verfahren nach einem der Ansprüche 1 bis 5, dadurch gekennzeichnet, daß jeweils vorhergehende Extraktionsstufen mit im Vergleich zu ihnen folgenden Stufen gesenkter Temperatur betrieben werden.

7. Verfahren nach Anspruch 6, dadurch gekennzeichnet, daß innerhalb der Zwischenstufen zwischen den Extraktionsstufen die Temperatur des Extraktionsgemisches gesenkt wird.

8. Verfahren nach einem der Ansprüche 1 bis 7, dadurch gekennzeichnet, daß aus den Zwischenstufen sich in denselben aus dem Extraktionsgemisch abscheidende extrahierte Kaffeeinhaltsstoffe abgezogen werden.

9. Verfahren nach einem der Ansprüche 1 bis 8, dadurch gekennzeichnet, daß aus dem mit Koffein und Reizstoffbildnern beladenen Extraktionsgemisch nach Verlassen einer jeweils ersten, den rohen Kaffee mit dem größten Gehalt an den genannten Inhaltsstoffen aufweisenden Extraktionsstufe vor Wiedereinbringung in die letzte Extraktionsstufe zuerst in einer Trennstufe durch Druckminderung ein wesentlicher Teil der extrahierten Inhaltsstoffe und danach in einer Waschstufe ein weiterer wesentlicher Teil der Inhaltsstoffe abgetrennt werden, wonach das Extraktionsgemisch vor Wiedereinbringung in die Extraktion durch eine der Waschstufe nachgeschaltete, vorzugsweise Aktivkohle aufweisende, Adsorptionsstufe geführt wird.

10. Verfahren nach einem der Ansprüche 1 bis 9, dadurch gekennzeichnet, daß nach Erreichen einer vorgesehenen Reduktion der Gehalte an Koffein und Reizstoffbildnern im in der jeweils letzten Extraktionsstufe behandelten Kaffee die Zuführung des im wesentlichen von extrahierten Stoffen befreiten, rückgeführten Extraktionsgemisches auf die jeweils vorletzte Stufe umgeschaltet wird, aus der genannten letzten Stufe der fertig behandelte Kaffee ausgetragen wird, diese Stufe mit Kaffee mit den höchsten, vorzugsweise mit rohem Kaffee mit den natürlichen, Gehalten an Koffein und Reizstoffbildnern beschickt wird, und dieser - jetzt ersten - vorher letzten Stufe das die vorher erste Stufe verlassende Extraktionsgemisch zugeführt wird.

11. Verfahren nach einem der Ansprüche 1 bis 10, dadurch gekennzeichnet, daß in der Vorstufe vor der jeweils letzten Extraktionsstufe das aus einer Regenerierung und in den Zwischenstufen zwischen den Extraktionsstufen jeweils das aus einer nachfolgenden Extraktionskolonne zugeführte Extraktionsgemisch mit einem jeweils in dosierter Menge eingebrachten Gemisch von Wasser und Äthylacetat in Kontakt gebracht wird.

## Claims

1. A process for the treatment of coffee, wherein substantially caffeine and substances forming stimulants at least partly during roasting, for example waxes and terpenes, are extracted from raw coffee which has an increased water content with respect to the natural water content by extraction with a fluid which is subjected to pressure and which contains a gas and an organic liquid, and after separation of the substances extracted from the coffee and regeneration the extraction fluid is returned into the extraction, characterised in that the coffee is extractively treated in at least two, preferably three, series-connected extraction stages in counterflow with an extraction mixture maintained in a gaseous state in these stages and containing the gas, preferably aqueous carbon dioxide, and the organic liquid, preferably ethyl acetate, wherein in each last stage the extraction mixture, which is substantially free of caffeine and stimulant components, is brought into contact with coffee which in the preceding stages has had its content of caffeine and stimulant components reduced by as much as possible, and the extraction mixture is brought into contact, with a loading of caffeine and stimulant components increasing from one particular stage to the preceding stage, with coffee having in said stages respectively increasing contents of these substances, wherein respectively in intermediate stages disposed between said stages the content of organic liquid, preferably ethyl acetate, is adjusted in the extraction mixture to a value stipulated for the respectively associated stage.

2. A process according to Claim 1, characterised in that the pressure of the gaseous extraction mixture in the extraction stages is maintained at 100 to 350 bar, preferably 180 to 300 bar.

3. A process according to Claim 1 or 2, characterised in that the temperature in the extraction stages is maintained at 40 to 150°C, preferably 40 to 100°C, in particular at 60 to 85°C.

4. A process according to Claims 1 to 3, characterised in that an extraction mixture with a content of from 5 to 20 % by weight, preferably from 9 to 13 % by weight, of ethyl acetate is used in the extraction stages.

5. A process according to any one of Claims 1 to 4, characterised in that the pressure of the extraction mixture is maintained substantially equal in each of the extraction stages.

6. A process according to any one of Claims 1 to 5, characterised in that respective preceding extraction stages are operated at a temperature which is lower than the stages following them.

7. A process according to Claim 6, characterised in that the temperature of the extraction mixture is lowered within the intermediate stages between the extraction stages.

8. A process according to any one of Claims 1 to 7, characterised in that extracted coffee constituents, which in the intermediate stages are separated from the extraction mixture, are drawn off from said intermediate stages.

9. A process according to any one of Claims 1 to 8, characterised in that, before being reintroduced into the last extraction stage, firstly a substantial portion of the extracted constituents are separated in a separation stage by pressure reduction and, subsequently in a washing stage, a further substantial portion of the constituents are separated from the extraction mixture laden with caffeine and stimulant components, after leaving a respective first extraction stage containing the raw coffee with the highest content of said constituents, after which the extraction mixture, before being reintroduced into the extraction, is passed through an adsorption stage, preferably containing activated carbon, connected downstream of the washing stage.

10. A process according to any one of Claims 1 to 9, characterised in that, after achieving a designated reduction in the contents of caffeine and stimulant components in the coffee treated in the respective last extraction stage, the feed of the returned extraction mixture, which is substantially freed of extracted substances, is switched over to the respective penultimate stage, the already treated coffee in discharged from said last stage, said stage is charged with coffee having the highest, natural contents of caffeine and stimulant components, preferably with raw coffee, and the extraction mixture leaving the previously first stage is fed to this (now first) previously last stage.

11. A process according to any one of Claims 1 to 10, characterised in that in the preceding stage before the respective last stage the extraction mixture, which is fed from a regeneration and in the intermediate stages between the extraction stages, respectively from a succeeding extraction column, is brought into contact with a mixture of water and ethyl acetate respectively introduced in metered quantities.

**Revendications**

1. Procédé de traitement de café, selon lequel on extrait de café vert, ayant une teneur en eau augmentée par rapport à la teneur en eau naturelle, dans l'essentiel de la caféine et, au moins en partie, des matières formant des excitants lors du grillage, par exemple des cires et du terpène, en effectuant l'extraction avec un fluide contenant un gaz et un liquide organique et soumis à une pression, et le fluide d'extraction, après séparation des matières extraites du café et régénération, est recyclé dans l'extraction, procédé caractérisé en ce que le café est traité par extraction dans au moins deux, de préférence au moins trois étages d'extraction disposés en série, en opérant à contre-courant avec un mélange d'extraction maintenu sous forme gazeuse dans les étages précités et qui contient le gaz, avantageusement du dioxyde de carbone contenant de l'eau ainsi que le liquide organique, de préférence de l'acétate d'éthyle, et où, dans un dernier étage correspondant, le mélange d'extraction pratiquement exempt de caféine et de formateurs d'excitants, est mis en contact avec du café dont la teneur en caféine et en formateurs d'excitants a été très fortement réduite dans les étages précédents, et en ce que le mélange d'extraction, dont la charge en caféine et en formateurs d'excitants augmente d'un étage correspondant à un étage suivant, est mis au contact avec du café contenant lesdites matières dans les étages précités mais respectivement avec des teneurs croissantes, et en ce que, dans chacun des étages intermédiaires situés entre les étages précités, la teneur en liquide organique, de préférence en acétate d'éthyle, est réglée dans le mélange d'extraction à une valeur prévue pour l'étage respectivement associé.

2. Procédé selon la revendication 1, caractérisé en ce que la pression du mélange d'extraction sous forme gazeuse est maintenue dans les étages d'extraction à une valeur de 100 à 350 bars, de préférence de 180 à 300 bars ( 1 bar = $10^5$ Pa).

3. Procédé selon la revendication 1 ou 2, caractérisé en ce que la température dans les étages d'extraction est maintenue entre 40 et 150°C, de préférence entre 40 et 100°C, notamment entre 60 et 85°C.

4. Procédé selon les revendications 1 à 3, caractérisé en ce que dans les étages d'extraction est introduit un mélange d'extraction ayant une teneur de 5 à 20 % en poids, de préférence de 9 à 13 % en poids, d'acétate d'éthyle.

5. Procédé selon une des revendications 1 à 4, caractérisé en ce que la pression du mélange d'extraction est maintenue sensiblement à la même valeur dans les étages d'extraction.

6. Procédé selon une des revendications 1 à 5, caractérisé en ce que des étages d'extraction respectivement précédents opèrent à une température diminuée par comparaison aux étages les suivant .

7. Procédé selon la revendication 6, caractérisé en ce que, dans les étages intermédiaires situés entre les étages d'extraction, la température du mélange d'extraction est abaissée.

8. Procédé selon une des revendications 1 à 7, caractérisé en ce qu'on retire des étages intermédiaires des matières contenant du café et extraites en se séparant du mélange d'extraction dans ces étages intermédiaires.

9. Procédé selon une des revendications 1 à 8, caractérisé en ce que, à partir du mélange d'extraction contenant de la caféine et des formateurs d'excitants, après que ce mélange d'extraction est sorti d'un premier étage respectif d'extraction, contenant le café vert ayant la plus forte teneur en constituants précités et avant le recyclage dans le dernier étage d'extraction, initialement on sépare, dans un étage séparateur et en opérant par diminution de pression, une partie importante des constituants extraits et ensuite, dans un étage de lavage, une autre partie importante des constituants est séparée et ensuite le mélange d'extraction, avant son recyclage dans le processus d'extraction, est canalisé à travers un étage d'adsorption, situé après l'étage de lavage et contenant avantageusement du charbon actif.

10. Procédé selon une des revendications 1 à 9, caractérisé en ce que, après qu'une réduction prédéterminée des teneurs en caféine et en formateurs d'excitants a été atteinte dans le café traité dans le dernier étage d'extraction respectif, l'introduction du mélange d'extraction recyclé et pratiquement libéré des substances extraites est renvoyée dans l'avant-dernier étage respectif et, à partir du dernier étage cité, le café dont le traitement est terminé est déchargé et cet étage est alimenté en café, de préférence du café vert, ayant les plus fortes teneurs naturelles en caféine et en formateurs d'excitants, et cet étage, qui était auparavant le dernier et qui est maintenant le premier, reçoit le mélange d'extraction ayant quitté l'étage qui était précédemment le premier.

11. Procédé selon une des revendications 1 à 10, caractérisé en ce que, dans l'étage situé avant le dernier étage d'extraction correspondant, le mélange d'extraction, qui a été soumis à une régénération et qui provient d'une colonne d'extraction placée à la suite est introduit dans les étages intermédiaires situés entre les étages d'extraction et est mis au contact d'un mélange d'eau et d'acétate d'éthyle, introduit respectivement en quantité dosée.